# EUROPÄISCHE PATENTANMELDUNG

(11) **EP 2 141 894 A1**
(43) Veröffentlichungstag der Anmeldung: **06.01.2010**
(21) Anmeldenummer: 08011771.6
(22) Anmeldetag: 30.06.2008
(51) Int. Cl.: H04L 29/14, H04L 29/08, G05B 19/418

(54) **Verfahren zur gesicherten Übermittlung von Daten in einem mehrere vernetzte Rechnereinheiten umfassenden Automatisierungssystem, Computerprogramm und Automatisierungssystem**

(71) Anmelder: Siemens Aktiengesellschaft, 80333 München (DE)
(72) Erfinder: Dingfelder, Sabine, 91088 Bubenreuth (DE); Schneider, Dieter, 76744 Wörth (DE)

(57) **Zusammenfassung**

Zur gesicherten Übermittlung von Daten in einem mehrere vernetzte Rechnereinheiten umfassenden Automatisierungssystem wird einer von einem auf einer ersten Rechnereinheit (1) ablaufenden Steuerungsprogramm initiierten Anforderung eines an einer zweiten Rechnereinheit (2) bereitgestellten Dienstes ein Identifikator zugeordnet. Dienste des Automatisierungssystems werden innerhalb einer dienstorientierten Architektur bereitgestellt. Eine die Anforderung und den Identifikator umfassende Meldung wird von der ersten Rechnereinheit an die zweite Rechnereinheit übermittelt (12). Die Anforderung und der Identifikator werden bei Empfang der Meldung in einer der zweiten Rechnereinheit zugeordneten Datenbasis gespeichert. Eine anhand des Identifikators abrufbare Statusinformation wird zur Anforderung des an der zweiten Rechnereinheit bereitgestellten Dienstes bereitgestellt (22).

## Beschreibung

In verteilten Automatisierungssystemen können Unterbrechungen von Kommunikationsverbindungen zwischen Rechnereinheiten eines Automatisierungssystems zu einer unerwünschten und mitunter unnötigen Wiederholung einer Übermittlung einer Dienstanforderung führen. Dies verursacht eine zusätzliche Auslastung von Kommunikationsverbinden des Automatisierungssystems, was zu weiteren Systemstörungen oder -fehlern führen kann. Eine besondere Problematik resultiert in Automatisierungssystemen regelmäßig aus einem Meldungsverkehr mit verhältnismäßig vielen, aber relativ kurzen Nachrichten, wodurch obige Probleme verstärkt werden. Daneben ist einer Echtzeitfähigkeit eines Automatisierungssystems und seiner Systemkomponenten Rechnung zu tragen.

Entsprechend bisherigen Lösungsansätzen werden zur Detektion von Übertragungsfehlern empfangene Meldungen durch eine Bestätigungsmeldung beantwortet. Bei Ausbleiben einer Bestätigungsmeldung innerhalb eines vorgebbaren Zeitintervalls nach Versand der Meldung wird dies als Verbindungsfehler interpretiert, und es erfolgt eine erneute Übermittlung der Meldung. Problematisch hierbei ist, daß vielfach die jeweilige Meldung empfangen worden ist und lediglich die Bestätigungsmeldung nicht gesendet worden ist bzw. bei einer Übermittlung verloren worden ist. In derartigen Fällen ist eine erneute Übermittlung der Meldung in Annahme eines Übertragungsfehlers zur Problembehandlung äußerst ungeeignet und kann sogar zu weiteren Folgeproblemen führen.

Der vorliegenden Erfindung liegt daher die Aufgabe zugrunde, ein effizientes, einfach in bestehende Automatisierungssysteme integrierbares Verfahren zur gesicherten Übermittlung von Daten in einem Automatisierungssystem zu schaffen, sowie eine geeignete technische Realisierung des Verfahrens anzugeben.

Diese Aufgabe wird erfindungsgemäß durch ein Verfahren mit den in Anspruch 1 angegebenen Merkmalen, durch ein Computerprogramm mit den in Anspruch 9 angegebenen Merkmalen sowie durch ein Automatisierungssystem mit den in Anspruch 10 angegebenen Merkmalen gelöst. Vorteilhafte Weiterbildungen der vorliegenden Erfindung sind in den abhängigen Ansprüchen angegeben.

Erfindungsgemäß wird zur gesicherten Übermittlung von Daten in einem mehrere vernetzte Rechnereinheiten umfassenden Automatisierungssystem einer von einem auf einer ersten Rechnereinheit ablaufenden Steuerungsprogramm initiierten Anforderung eines an einer zweiten Rechnereinheit bereitgestellten Dienstes ein Identifikator zugeordnet. Dabei werden Dienste des Automatisierungssystems innerhalb einer dienstorientierten Architektur bereitgestellt. Dienstorientierte bzw. serviceorientierte Architekturen (SOA) zielen darauf ab, Dienste in komplexen Organisationseinheiten zu strukturieren und für eine Vielzahl von Nutzern verfügbar zu machen. Dabei werden beispielsweise vorhandene Komponenten eines Datenverarbeitungssystems, wie Programme, Datenbanken, Server oder Websites, so koordiniert, daß von den Komponenten bereitgestellte Leistungen zu Diensten zusammen gefaßt und berechtigten Nutzern zur Verfügung gestellt werden. Serviceorientierte Architekturen ermöglichen eine Anwendungsintegration, indem Komplexität einzelner Teilkomponenten eines Datenverarbeitungssystems hinter standardisierten Schnittstellen verborgen wird. Dies erleichtert gerade in verteilten Automatisierungssystemen eine Bereitstellung von Komponentenfunktionen.

Darüber hinaus wird erfindungsgemäß eine die Anforderung und den Identifikator umfassende Meldung von der ersten Rechnereinheit an die zweite Rechnereinheit übermittelt. Die Anforderung und der Identifikator werden bei Empfang der Meldung in einer der zweiten Rechnereinheit zugeordneten Datenbasis gespeichert. Des weiteren wird eine anhand des Identifikators abrufbare Statusinformation zur Anforderung des an der zweiten Rechnereinheit bereitgestellten Dienstes bereitgestellt. Die erfindungsgemäße Lösung bietet den Vorteil einer weitgehenden Unabhängigkeit von in einem Automatisierungssystem verwendeten Kommunikationsprotokollen und einer relativ einfachen Integration in bestehende Automatisierungssysteme. Zudem kann mit der vorliegenden Erfindung durch eine wiederholte unnötige Übermittlung von Dienstanforderungen bedingte Systembelastung vermieden werden.

Entsprechend einer bevorzugten Weiterbildung der vorliegenden Erfindung wird zur Detektion eines Übertragungsfehlers auf einer Kommunikationsverbindung zwischen der ersten Rechnereinheit und der zweiten Rechnereinheit überprüft, ob in der zur zweiten Rechnereinheit zugeordneten Datenbasis ein dem Identifikator zugeordneter Datensatz gespeichert ist. Auf diese Weise lassen sich Übertragungsfehler besonders leicht und effizient erkennen. Des weiteren kann eine Detektion eines Übertragungsfehlers durch die erste Rechnereinheit initiiert werden und eine erneute Übermittlung der die Anforderung und den Identifikator umfassenden Meldung nur bei negativem Überprüfungsergebnis erfolgen. Auf diese Weise wird eine unnötige Belegung von Kommunikationsverbindungen innerhalb des Automatisierungssystems vermieden.

Vorteilhafterweise greift die erste Rechnereinheit für eine Detektion eines Übertragungsfehlers anhand einer Netzwerkadresse der zweiten Rechnereinheit und des Identifikator auf die der zweiten Rechnereinheit zugeordnete Datenbasis zu. Hiermit wird eine einfache Kontrollmöglichkeit in bezug auf einen möglichen Übertragungsfehler für die erste Rechnereinheit eröffnet. Der Identifikator kann in der zur zweiten Rechnereinheit zugeordneten Datenbasis gespeichert bleiben, solange die Anforderung des durch die zweite Rechnereinheit bereitgestellten Dienstes noch in Bearbeitung ist. Somit kann seitens der ersten Rechnereinheit eine Bearbeitung der Anforderung des durch die zweite Rechnereinheit bereitgestellten Dienstes selbständig überwacht werden.

Die Erfindung wird nachfolgend an einem Ausführungsbeispiel anhand der Zeichnung näher erläutert. Es zeigt die
- Figur: eine schematische Darstellung eine Automatisierungssystems zur Durchführung eines Verfahrens zur gesicherten Übermittlung von Daten.

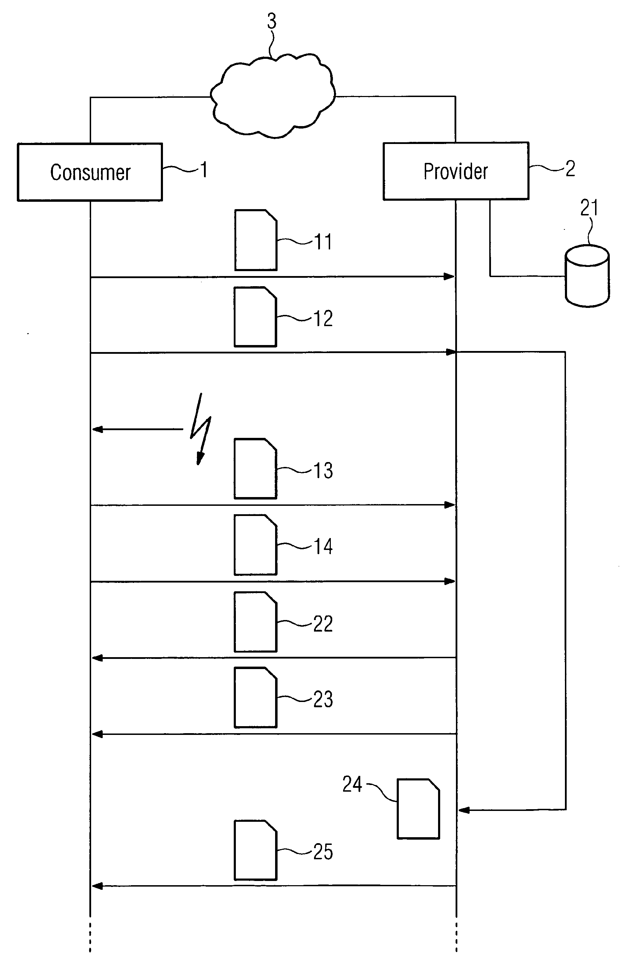

Das in Figur 1 dargestellte Automatisierungssystem umfaßt eine erste Rechnereinheit 1 und eine zweite Rechnereinheit 2, die an Netzknoten eines Kommunikationsnetzes 3 angeschlossen und miteinander verbunden sind. Auf der ersten Rechnereinheit 1 läuft ein Steuerungsprogramm ab, das eine Anforderung eines an der zweiten Rechnereinheit bereitgestellten Dienstes initiiert. Hierzu wird der Anforderung durch die erste Rechnereinheit 1 ein Identifikator zugeordnet. Eine Zuordnung des Identifikators kann grundsätzlich auch durch eine separate Zuordnungseinheit erfolgen, die für eine Vielzahl von Rechnereinheiten innerhalb des Automatisierungssystems einen entsprechenden Dienst anbietet.

Dienste des Automatisierungssystems werden innerhalb einer dienstorientierten Architektur bereitgestellt. Durch die Rechnereinheiten 1-2 bereitgestellte Dienste dienen im vorliegenden Ausführungsbeispiel zur Ansteuerung von meßtechnischer oder aktorischer Peripherie der Rechnereinheiten 1-2, wie Sensoren oder Roboter. Im Hinblick auf einen Meldungsaustausch zur Steuerung und Überwachung der Rechnereinheiten 1-2 ist sicherzustellen, daß Meldungen auf einem Weg von einem Sender zu einem Empfänger nicht verfälscht werden. Andernfalls könnte dies zu Störungen oder Schäden im Automatisierungssystem führen. Außerdem kann ein Interesse darin bestehen, daß beispielsweise ein infolge eines Ablaufs eines Steuerungsprogramms erfaßtes Meßergebnis nur durch einen berechtigten Benutzer abfragbar ist und eine übermittelte Meldung mit dem Meßergebnis nicht durch unautorisierte Benutzer abgefangen und ausgelesen werden kann. Ein Benutzer kann hierbei auch ein anderes Gerät innerhalb des Automatisierungssystems sein.

Zur Sicherung der Kommunikation innerhalb des Automatisierungssystems werden zunächst Rechnereinheiten erfaßt, die über ein ungesichertes Netzwerk miteinander verbunden sind. Anhand der erfaßten Netzknoten wird eine Auswahl von Netzknoten ermittelt, deren Kommunikation auf einer Netzwerkprotokollebene oberhalb einer Transportschicht zu sichern ist. Im vorliegenden Fall sind dies die Netzknoten, an denen die Rechnereinheiten 1-2 angeschlossen sind. Auf Basis obiger Auswahl von Netzknoten werden automatisch netzknotenindividuelle digitale Signaturschlüssel an die Rechnereinheiten 1-2 übermittelt. Eine Kommunikation zwischen den Rechnereinheiten 1-2 wird anhand der übermittelten Signaturschlüssel gegen eine Verfälschung gesichert. Zur Sicherung der Kommunikation zwischen den Rechnereinheiten 1-2 werden von einem sendenden Netzknoten an einen empfangenden Netzknoten übermittelte Daten mittels eines dem sendenden Netzknoten zugeordneten Signaturschlüssels digital signiert. Auf Seiten des empfangenden Netzknotens werden empfangene digital signierte Daten mittels eines dem sendenden Netzknoten zugeordneten digitalen Zertifikats verifiziert. Zur Sicherung der Kommunikation wird dabei als Netzwerkprotokoll Secure Socket Layer (SSL) bzw. Transport Layer Security (TLS) verwendet.

Nach Zuordnung des Identifikators zur Anforderung des durch die zweite Rechnereinheit 2 bereitgestellten Dienstes übermittelt die erste Rechnereinheit 1 eine Meldung 11 zum Aufbau einer Kommunikationsverbindung und zur Eröffnung einer Sitzung an die zweite Rechnereinheit 2. Sobald die Sitzung zwischen den Rechnereinheiten 1-2 erfolgreich eröffnet ist, übermittelt die erste Rechnereinheit 1 eine Meldung 12 an die zweite Rechnereinheit 2, welche die Anforderung und den Identifikator umfaßt. Bei Empfang der Meldung 11 werden die Anforderung und der Identifikator in einer der zweiten Rechnereinheit 2 zugeordneten Datenbank 21 gespeichert. Die zweite Rechnereinheit 2 stellt dann eine anhand des Identifikators abrufbare Statusinformation zur Dienstanforderung bereit.

Kommt es beispielsweise nach Eröffnung der Sitzung zwischen den Rechnereinheiten 1-2 und vor vollständiger Bearbeitung der Dienstanforderung zu einem Verbindungsabbruch, so kann von der ersten Rechnereinheit 1 anhand einer Netzwerkadresse der zweiten Rechnereinheit 2 und anhand des Identifikators auf die in der Datenbank 21 gespeicherte und laufend aktualisierte Statusinformation zur Dienstanforderung zugegriffen werden. Hierzu übermittelt die erste Rechnereinheit 1 erneut eine Meldung 13 zum Aufbau einer Kommunikationsverbindung und zur Eröffnung einer Sitzung an die zweite Rechnereinheit 2. Sobald die Sitzung zwischen den Rechnereinheiten 1-2 wieder erfolgreich eröffnet ist, übermittelt die erste Rechnereinheit 1 eine Meldung 14 an die zweite Rechnereinheit 2, welche eine Anforderung zur Abfrage der Statusinformation und den Identifikator umfaßt.

Nach Empfang der Meldung 14 ruft die zweite Rechnereinheit 2 die aktuelle dem Identifikator zugeordnete Statusinformation zur Dienstanfrage aus der Datenbank 21 ab und übermittelt eine die Statusinformation umfassende Meldung 22 an die erste Rechnereinheit 1. Optional kann der durch die zweite Rechnereinheit 2 bereitgestellte Dienst derart konfiguriert werden, daß die erste Rechnereinheit innerhalb vorgebbarer Zeitintervalle oder bei ausgewählten Ereignis automatisch mit einer aktualisierten Statusinformation versorgt wird, die durch eine erneute Meldung 23 an die erste Rechnereinheit 1 übermittelt wird.

Wenn die Dienstanforderung durch die zweite Rechnereinheit 2 vollständig bearbeitet ist und dort ein Gesamtergebnis 24 der Dienstanforderung vorliegt, übermittelt die zweite Rechnereinheit 2 eine Meldung 25 an die erste Rechnereinheit 1, die den Identifikator und das Gesamtergebnis umfaßt. Solange die Anforderung des durch die zweite Rechnereinheit 2 bereitgestellten Dienstes noch in Bearbeitung ist, bleiben der Identifikator und die Statusinformation in der zur zweiten Rechnereinheit 2 zugeordneten Datenbank 21 gespeichert. Nach Beendigung der Bearbeitung können der Identifikator und die Statusinformation aus der Datenbank 21 gelöscht werden.

Das vorangehend beschriebene Verfahren ermöglicht eine selbständige Erkennung von Übertragungsfehler durch die erste Rechnereinheit 1. Zur Detektion eines Übertragungsfehlers auf einer Kommunikationsverbindung zwischen der ersten Rechnereinheit 1 und der zweiten Rechnereinheit 2 veranlaßt die erste Rechnereinheit 1 eine Überprüfung, ob in der zur zweiten Rechnereinheit 2 zugeordneten Datenbank 21 ein dem Identifikator zugeordneter Datensatz gespeichert ist. Eine erneute Übermittlung der die Anforderung und den Identifikator umfassenden Meldung erfolgt dann nur bei negativem Überprüfungsergebnis und nicht bereits bei Ausbleiben einer Acknowledge-Meldung. Eine Acknowledge-Meldung wird im vorliegenden Ausführungsbeispiel im Sinne einer Vermeidung von unnötigem Meldungsverkehr nur auf gesonderte Anforderung der ersten Rechnereinheit 1 durch die zweite Rechnereinheit 2 versandt.

Das beschriebene Verfahren wird durch ein Computerprogramm implementiert, das beispielsweise in einen Arbeitsspeicher der zweiten Rechnereinheit 2 ladbar und zumindest eine Codeabschnitt aufweist, bei dessen Ausführung eine Zuordnung eines Identifikators zu einer von einem auf einer ersten Rechnereinheit ablaufenden Steuerungsprogramm initiierten Anforderung eines an einer zweiten Rechnereinheit bereitgestellten Dienstes veranlaßt wird, wenn das Computerprogramm in der zweiten Rechnereinheit 2 abläuft. Dabei sind Dienste des Automatisierungssystems innerhalb einer dienstorientierten Architektur bereitgestellt. Eine Veranlassung der Zuordnung des Identifikators zu einer Dienstanforderung erfolgt beispielsweise, indem ein auf der ersten Rechnereinheit 1 ablaufendes Steuerungsprogramm oder ein dort bereitgestellter Dienst derart konfiguriert wird, daß bei einer Dienstanforderung automatisch ein Identifikator durch das die Dienstanforderung initiierende Steuerungsprogramm oder durch den die Dienstanforderung initiierenden Dienst zugeordnet wird. Außerdem werden bei Ablauf des Computerprogramms die Anforderung und der Identifikator bei Empfang einer Meldung, die den Identifikator und die Anforderung umfaßt und von der ersten Rechnereinheit 1 an die zweite Rechnereinheit 2 übermittelt worden ist, in der zur zweiten Rechnereinheit 2 zugeordneten Datenbank 21 gespeichert. Des weiteren wird eine anhand des Identifikators abrufbare Statusinformation zur Dienstanforderung bei Ablauf des Computerprogramms durch die zweite Rechnereinheit 2 bereitgestellt.

Die Anwendung der vorliegenden Erfindung ist nicht auf das beschriebene Ausführungsbeispiel beschränkt.

## Patentansprüche

1. Verfahren zur gesicherten Übermittlung von Daten in einem mehrere vernetzte Rechnereinheiten umfassenden Automatisierungssystem, bei dem
- einer von einem auf einer ersten Rechnereinheit ablaufenden Steuerungsprogramm initiierten Anforderung eines an einer zweiten Rechnereinheit bereitgestellten Dienstes ein Identifikator zugeordnet wird, wobei Dienste des Automatisierungssystems innerhalb einer dienstorientierten Architektur bereitgestellt werden,
- eine die Anforderung und den Identifikator umfassende Meldung von der ersten Rechnereinheit an die zweite Rechnereinheit übermittelt wird,
- die Anforderung und der Identifikator bei Empfang der Meldung in einer der zweiten Rechnereinheit zugeordneten Datenbasis gespeichert werden,
- eine anhand des Identifikators abrufbare Statusinformation zur Anforderung des an der zweiten Rechnereinheit bereitgestellten Dienstes bereitgestellt wird.

2. Verfahren nach Anspruch 1,
bei dem zur Detektion eines Übertragungsfehlers auf einer Kommunikationsverbindung zwischen der ersten Rechnereinheit und der zweiten Rechnereinheit überprüft wird, ob in der zur zweiten Rechnereinheit zugeordneten Datenbasis ein dem Identifikator zugeordneter Datensatz gespeichert ist.

3. Verfahren nach Anspruch 2,
bei dem eine Detektion eines Übertragungsfehlers durch die erste Rechnereinheit initiiert wird und eine erneute Übermittlung der die Anforderung und den Identifikator umfassenden Meldung nur bei negativem Überprüfungsergebnis erfolgt.

4. Verfahren nach einem der Ansprüche 2 oder 3,
bei dem die erste Rechnereinheit für eine Detektion eines Übertragungsfehlers anhand einer Netzwerkadresse der zweiten Rechnereinheit und des Identifikator auf die der zweiten Rechnereinheit zugeordnete Datenbasis zugreift.

5. Verfahren nach einem der Ansprüche 1 bis 4,
bei dem der Identifikator in der zur zweiten Rechnereinheit zugeordneten Datenbasis gespeichert, solange die Anforderung des durch die zweite Rechnereinheit bereitgestellten Dienstes noch in Bearbeitung ist.

6. Verfahren nach einem der Ansprüche 1 bis 5,
bei dem Netzknoten mit angeschlossenen Rechnereinheiten erfaßt werden, die über ein ungesichertes Netzwerk miteinander verbunden sind, anhand der erfaßten Netzknoten eine Auswahl von Netzknoten ermittelt wird, deren Kommunikation auf einer Netzwerkprotokollebene oberhalb einer Transportschicht zu sichern ist, anhand der Auswahl automatisch netzknotenindividuelle digitale Signaturschlüssel an von der Auswahl umfaßte Netzknoten übermittelt werden, eine Kommunikation zwischen von der Auswahl umfaßten Netzknoten anhand der übermittelten Signaturschlüssel gegen eine Verfälschung gesichert wird.

7. Verfahren nach Anspruch 6,
bei dem von einem von der Auswahl umfaßten sendenden Netzknoten an einen von der Auswahl umfaßten empfangenden Netzknoten übermittelte Daten mittels eines dem sendenden Netzknoten zugeordneten Signaturschlüssels digital signiert werden, und
bei dem empfangene digital signierte Daten mittels eines dem sendenden Netzknoten zugeordneten digitalen Zertifikats verifiziert werden.

8. Verfahren nach einem der Ansprüche 6 oder 7,
bei dem als Netzwerkprotokoll zur Sicherung der Kommunikation zwischen von der Auswahl umfaßten Netzknoten Secure Socket Layer oder Transport Layer Security verwendet wird.

9. Computerprogramm zur gesicherten Übermittlung von Daten, das in einen Arbeitsspeicher eines Rechners ladbar ist und zumindest einen Codeabschnitt aufweist, bei dessen Ausführung
- eine Zuordnung eines Identifikators zu einer von einem auf einer ersten Rechnereinheit ablaufenden Steuerungsprogramm initiierten Anforderung eines an einer zweiten Rechnereinheit bereitgestellten Dienstes veranlaßt wird, wobei Dienste des Automatisierungssystems innerhalb einer dienstorientierten Architektur bereitgestellt sind,
- die Anforderung und der Identifikator bei Empfang einer die Anforderung und den Identifikator umfassenden von der ersten Rechnereinheit an die zweite Rechnereinheit übermittelten Meldung in einer der zweiten Rechnereinheit zugeordneten Datenbasis gespeichert werden,
- eine anhand des Identifikators abrufbare Statusinformation zur Anforderung des an der zweiten Rechnereinheit bereitgestellten Dienstes bereitgestellt wird,
wenn das Computerprogramm im Rechner abläuft.

10. Automatisierungssystem mit
- mehreren über ein Kommunikationsnetz miteinander verbundenen Rechnereinheiten an Netzknoten des Automatisierungssystems, in dem Dienste innerhalb einer dienstorientierten Architektur bereitgestellt sind,
- einer Zuordnungsordnungseinheit zur Zuordnung eines Identifikators zu einer von einem auf einer ersten Rechnereinheit ablaufenden Steuerungsprogramm initiierten Anforderung eines an einer zweiten Rechnereinheit bereitgestellten Dienstes, wobei
- die erste Rechnereinheit zur Übermittlung einer die Anforderung und den Identifikator umfassenden Meldung von der ersten Rechnereinheit an die zweite Rechnereinheit ausgestaltet ist und
- die zweite Rechnereinheit zur Speicherung der Anforderung und des Identifikators bei Empfang der Meldung in einer der zweiten Rechnereinheit zugeordneten Datenbasis und zur Bereitstellung einer anhand des Identifikators abrufbare Statusinformation zur Anforderung des an der zweiten Rechnereinheit bereitgestellten Dienstes ausgestaltet ist.
